# EUROPEAN PATENT APPLICATION

(11) **EP 4 171 119 A1**
(43) Date of publication of application: **26.04.2023**
(21) Application number: 21827029.6
(22) Date of filing: 17.06.2021
(51) Int. Cl.: H04W 36/00

(54) **METHOD AND APPARATUS FOR SUSPENDING SECONDARY CELL GROUP**

(30) Priority: 19.06.2020 CN 202010568510
(71) Applicant: Vivo Mobile Communication Co., Ltd., Dongguan, Guangdong 523863 (CN)
(72) Inventor: LIU, Xuanbing, Dongguan, Guangdong 523863 (CN); ZHENG, Qian, Dongguan, Guangdong 523863 (CN); YANG, Xiaodong, Dongguan, Guangdong 523863 (CN)
(74) Representative: Raffay & Fleck
(86) International application number: PCT/CN2021/100597
(87) International publication number: WO 2021/254434

(57) **Abstract**

Provided are a method and apparatus for suspending a secondary cell group. The method comprises: a first node receiving a request message sent by a second node, wherein the request message is used for requesting to suspend a secondary cell group of a user terminal; and where the first node sends, to the second node, an acknowledge message for indicating that the suspension of the secondary cell group is determined, the first node triggering a target node to suspend the secondary cell group of the user terminal, wherein the target node is a node for controlling the secondary cell group, and the target node is the first node or the second node.

## Description

### CROSS-REFERENCE TO RELATED APPLICATIONS

This application claims the priority of the Chinese Patent Application No. 202010568510.4 filed in China on June 19, 2020, which is incorporated herein by reference in its entirety.

### TECHNICAL FIELD

This application relates to the field of communication technologies, and specifically, to a method and an apparatus for suspending a secondary cell group.

### BACKGROUND

In the existing communication technologies, only the concept of suspending a secondary cell group (Secondary Cell Group, SCG) under the control by a network is mentioned. For example, in a case that a user terminal (User Equipment, UE) transmits a low amount of data for a long period of time, instead of directly deleting the SCG, a network side may temporarily suspend the SCG and add the SCG back in a case that a large amount of data is transmitted. However, how to implement SCG suspension is a problem to be solved.

### SUMMARY

An objective of embodiments of this application is to provide a method and an apparatus for suspending a secondary cell group, which can flexibly solve the problem of how to implement suspending of an SCG.

In order to solve the technical problem, this application is implemented as follows:
A first aspect provides a method for suspending a secondary cell group. The method includes: receiving, by a first node, a request message sent by a second node, where the request message is used for requesting to suspend a secondary cell group of a user terminal; and in a case that the first node sends to the second node an acknowledgment message for indicating determining of suspending the secondary cell group, triggering, by the first node, a target node to suspend the secondary cell group of the user terminal, where the target node is a node configured to control the secondary cell group; and the target node is the first node or the second node.

A second aspect provides an apparatus for suspending a secondary cell group, including: a first receiving module, configured to receive a request message sent by a second node, where the request message is used for requesting to suspend the secondary cell group of a user terminal; and a first triggering module, configured to trigger a target node to suspend the secondary cell group of the user terminal in a case that an acknowledgment message for indicating determining of suspending the secondary cell group is sent to the second node, where the target node is a node configured to control the secondary cell group; and the target node is the first node or the second node.

A third aspect provides a method for suspending a secondary cell group, including: in a case that a first node determines to suspend the secondary cell group, sending, by the first node, an indication message to a second node, where the indication message is used for notifying the second node of a decision of suspending the secondary cell group of a user terminal; and triggering, by the first node, a target node to suspend the secondary cell group of the user terminal, where the target node is a node configured to control the secondary cell group; and the target node is the first node or the second node.

A fourth aspect provides an apparatus for suspending a secondary cell group, including: a first sending module, configured to send an indication message to a second node upon determining of suspending the secondary cell group, where the indication message is used for notifying the second node of a decision of suspending the secondary cell group of a user terminal; and a third triggering module, configured to trigger a target node to suspend the secondary cell group of the user terminal, where the target node is a node configured to control the secondary cell group; and the target node is the first node or the second node.

A fifth aspect provides a network side device. The network side device includes a processor, a memory, and a program or instructions stored on the memory and executable by the processor, where the processor is configured to execute the program or the instructions to implement the steps of the method according to the first aspect or the third aspect.

According to a sixth aspect, a readable storage medium is provided, storing a program or an instruction, where the program or the instruction, when executed by a processor, performs the steps of the method according to the first aspect; or implements the steps of the method according to the third aspect.

An eighth aspect provides a chip. The chip includes a processor and a communication interface, the communication interface is coupled to the processor, and the processor is configured to execute a program or instructions to implement the method according to the first aspect, or to implement the method according to the third aspect.

According to a ninth aspect, a computer program product is provided, being stored in a readable storage medium, where the computer program product, when executed by at least one processor, implements the steps of the method according to the first aspect; or implement the steps of the method according to the third aspect.

A tenth aspect provides an apparatus for suspending a secondary cell group. The apparatus is configured to perform the steps of the method according to the first aspect or the method according to the third aspect.

In the embodiments of this application, after the second node sends to the first node the request message for requesting to suspend the SCG, in a case that the first node determines to suspend the SCG, the target node configured to control the SCG is triggered to suspend the SCG, so as to implement suspension of the SCG; or the first node decides by itself whether to suspend the SCG, upon deciding to suspend the SCG, the first node only needs to notify the second node of the decision, and finally, the node configured to control the SCG is triggered to suspend the SCG of the user terminal, so as to implement suspension of the SCG to solve the problem of how to implement the suspension of the SCG.

### BRIEF DESCRIPTION OF THE DRAWINGS

FIG. 1 is a block diagram of an applicable radio communication system according to an embodiment of this application;
FIG. 2 is a flowchart 1 of a method for suspending a secondary cell group according to an embodiment of this application;
FIG. 3 is a flowchart of an MN initiating a request for suspending an SCG to an SN to suspend the SCG according to an embodiment of this application;
FIG. 4 is a flowchart of an SN initiating a request for suspending an SCG to an MN to suspend the SCG according to an embodiment of this application;
FIG. 5 is a flowchart 2 of a method for suspending a secondary cell group according to an embodiment of this application;
FIG. 6 is a flowchart of an MN determining to suspend an SCG according to an embodiment of this application;
FIG. 7 is a flowchart of an SN determining to suspend an SCG according to an embodiment of this application;
FIG. 8 is a schematic structural diagram 1 of an apparatus for suspending a secondary cell group according to an embodiment of this application;
FIG. 9 is a schematic structural diagram 2 of an apparatus for suspending a secondary cell group according to an embodiment of this application;
FIG. 10 is a schematic structural diagram of a communication device according to an embodiment of this application; and
FIG. 11 is a schematic structural diagram of a network side device according to an embodiment of the present invention.

### DETAILED DESCRIPTION

The technical solutions in the embodiments of this application are clearly and completely described in the following with reference to the accompanying drawings in the embodiments of this application. Apparently, the described embodiments are merely some rather than all of the embodiments of this application. All other embodiments obtained by a person skilled in the art based on the embodiments of this application without creative efforts shall fall within the protection scope of this application.

The specification and claims of this application, and terms "first" and "second" are used to distinguish similar objects, but are unnecessarily used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

First, corresponding terms involved in the embodiments of this application are introduced:
Dual connectivity (Dual Connectivity, DC) means providing UE with resources of two network nodes (access network elements), one of which is referred to as a master node (Master Node, MN) and the other one of which is referred to as a secondary node (Secondary Node, SN). The carrier aggregation (Carrier Aggregation, CA) technology is used in each network node, that is, a series of serving cells, also referred to as a cell group (cell group), controlled by the node are configured for the user terminal (User Equipment, UE). The master node MN controls a master cell group (Master Cell Group, MCG) and the secondary node SN controls a secondary cell group (Secondary Cell Group, SCG). Each cell group includes a special cell (Special Cell, SpCell) and a series of secondary cells (Secondary Cells, Scells). In an MCG, the special cell is referred to as a primary cell (Primary Cell, PCell), and in an SCG, the special cell is referred to as a primary secondary cell (Primary Secondary Cell, PSCell). In a cell group, the SpCell uses a primary carrier, while the other secondary cells use secondary carriers, and resource scheduling within the cell group is performed by the SpCell.

It is worth pointing out that the technologies described in the embodiments of this application are not limited to the Long Term Evolution (Long Term Evolution, LTE)/LTE-advanced (LTE-Advanced, LTE-A) systems, and may also be used in other radio communication systems, such as code division multiple access (Code Division Multiple Access, CDMA), time division multiple access (Time Division Multiple Access, TDMA), and frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described can be used for both the foregoing systems and radio technologies, as well as other systems and radio technologies. However, the following description describes a new radio (New Radio, NR) system for example purposes, and uses NR terminology in most of the following description, although these technologies can also be applied to applications other than NR system applications, such as a 6^{th} generation (6^{th} Generation, 6G) communication system.

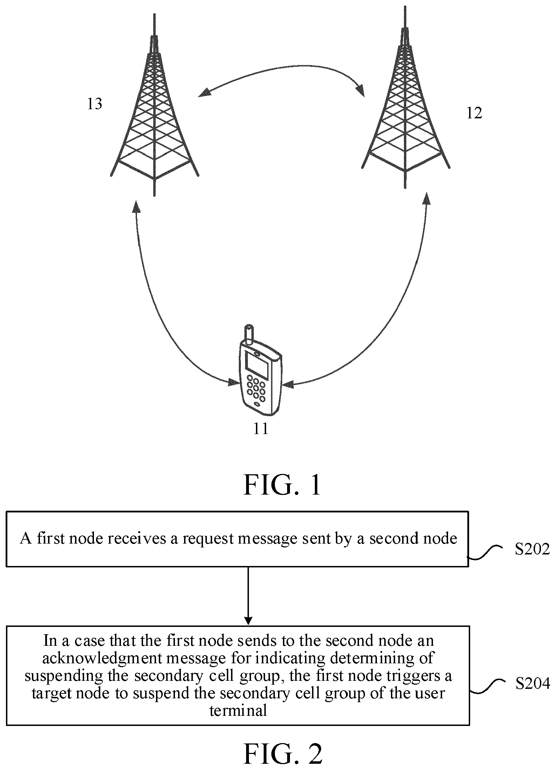

FIG. 1 is a block diagram of an applicable radio communication system according to an embodiment of this application. The radio communication system includes a terminal 11, a network side device 12, and a network side device 13. The terminal 11 may also be referred to as a terminal device or a user terminal (User Equipment, UE). The terminal 11 may be terminal side devices such as a mobile phone, a tablet computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device), or in-vehicle equipment (VUE), and a pedestrian terminal (PUE). The wearable device includes: a bracelet, a headphone, glasses, and the like. It should be noted that the embodiments of this application are not limited to the specific type of the terminal 11. There is a master and secondary difference between the network side device 12 and the network side device 13, that is, a master network side device 12 and a secondary network side device 13, and vice versa. The network side device 12 and the network side device 13 may be base stations, where the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a WLAN access point, a WiFi node, a transmitting receiving point (Transmitting Receiving Point, TRP) or other suitable term in the field, as long as the same technical effect is achieved, the base station is not limited to specific technical vocabularies, and it should be noted that, in the embodiments of this application, a base station in the NR system is used as an example only and the specific type of the base station is not limited.

The method for suspending a secondary cell group provided in the embodiments of this application are described in detail below by using specific embodiments and application scenarios with reference to the accompanying drawings.

FIG. 2 is a flowchart 1 of a method for suspending a secondary cell group according to an embodiment of this application. As shown in FIG. 2, the steps of the method include:
Step S202: A first node receives a request message sent by a second node, where the request message is used for requesting to suspend a secondary cell group of a user terminal.
Step S204: In a case that the first node sends to the second node an acknowledgment message for indicating determining of suspending the secondary cell group, the first node triggers a target node to suspend the secondary cell group of the user terminal, where the target node is a node configured to control the secondary cell group; and the target node is the first node or the second node.

As can be learned from step S202 and step S204, after the second node sends to the first node the request message for requesting to suspend the SCG, in a case that the first node determines to suspend the SCG, the target node configured to control the SCG is triggered to suspend the SCG, so as to implement suspension of the SCG to solve the problem of how to implement the suspension of the SCG.

It should be noted that in a case that the first node is a master node MN, the second node is a secondary node SN; or in a case that the first node is a secondary node SN, the second node is a master node MN.

In this embodiment of this application, preferably, the secondary node controls the SCG. Therefore, in a case that the first node is an MN and the second node is an SN, step S202 and step S204 are: the MN receives a request message sent by the SN; and in a case that the MN sends to the SN an acknowledgment message for indicating determining of suspending the secondary cell group, the MN triggers the SN to suspend the secondary cell group of the user terminal.

In this case, the request message sent by the MN to the SN may be an SCG suspend request (SCG Suspend Request) carrying first indication information, or an S-NODE MODIFICATION REQUEST (secondary node modification request) message carrying first indication information, where the first indication information is used for indicating suspending of the secondary node. In an actual application scenario, a corresponding selection is made according to actual needs.

In another optional implementation in this embodiment of this application, in a case that the first node is an SN and the second node is an MN, step S202 and step S204 may be: the SN receives a request message sent by the MN; and in a case that the SN sends to the MN an acknowledgment message for indicating determining of suspending the secondary cell group, the SN suspends the secondary cell group of the user terminal. In other words, in this case, both the first node and the target node are the SN, that is, the process of triggering the suspension is directly suspending the secondary cell group of the user terminal by the SN.

In this case, the request message may be an S-NODE MODIFICATION REQUIRED (secondary node modification requirement) message carrying information of suspending the SCG; or may be an SCG suspend request message carrying information of suspending the SCG. In an actual application scenario, a corresponding selection is made according to actual needs.

Optionally, in this embodiment of this application, in the case that the first node determines to suspend the secondary cell group, the method in this embodiment of this application may further include:
Step S206: The first node sends a reconfiguration message to the user terminal, where the reconfiguration message carries information of suspending the secondary cell group.
Step S208: The first node receives a reconfiguration completion message fed back by the user terminal in response to the configuration message.

In a case that the first node is an MN and the second node is an SN, there is no sequential order between step S206 and the step of sending, by the first node to the second node, an acknowledgment message for indicating determining of suspending the secondary cell group. In other words, after the MN sends the reconfiguration message to the user terminal, the MN sends to the SN the acknowledgment message for indicating determining of suspending the secondary cell group, or after the MN sends to the SN the acknowledgment message for indicating determining of suspending the secondary cell group, the MN sends the reconfiguration message to the user terminal.

In a case that the first node is an SN and the second node is an MN, there is no sequential order between step S206 and the step of sending, by the first node to the second node, an acknowledgment message for indicating determining of suspending the secondary cell group. In other words, after the SN sends the reconfiguration message to the user terminal, the SN sends to the MN the acknowledgment message for indicating determining of suspending the secondary cell group, or after the SN sends to the MN the acknowledgment message for indicating determining of suspending the secondary cell group, the SN sends the reconfiguration message to the user terminal. However, in this case, the step of suspending, by the SN, the secondary cell group of the user terminal in step S204 is after step S208, that is, after the SN receives the reconfiguration completion message fed back by the user terminal in response to the configuration message.

The following describes this application by examples in combination with a specific implementation of this embodiment of this application.

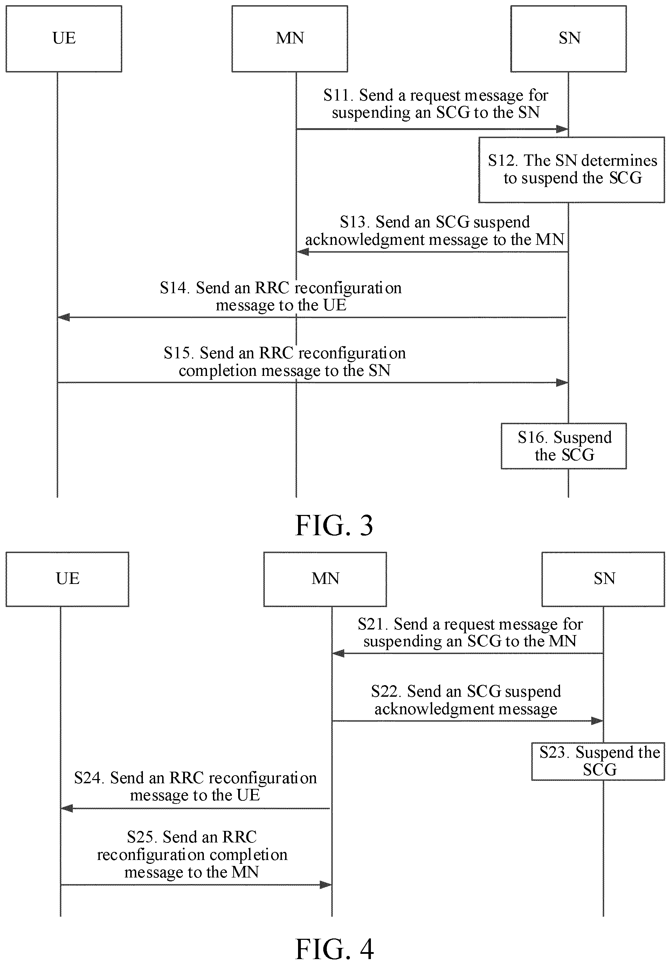

In a case that the first node is an SN and the second node is an MN, as shown in FIG. 3, the steps of the specific implementation of this embodiment of this application include:
Step S 11: The MN initiates SCG suspend and sends an SCG suspend request (SCG Suspend Request) to the SN.

Another implementation of the SCG Suspend Requests message may be an S-NODE MODIFICATION REQUEST message carrying first indication information, where the first indication information is used for indicating suspending of the secondary node.

Step S12: The SN determines to suspend the SCG.

Step S13: The SN sends an SCG suspend acknowledgment message to the MN.

It should be noted that SN may also refuse to suspend the SCG, the SN sends a refuse message (SCG Suspend REFUSE) to the MN, and the process ends.

Step S14: The SN sends an RRC reconfiguration message (RRC (Connection) Reconfiguration) to the UE, where the RRC reconfiguration message carries SCG Suspend information.

Step S15: The UE receives the RRC reconfiguration message (RRC (Connection) Reconfiguration) and sends an RRC reconfiguration completion message (RRC (Connection)ReconfigurationComplete) to the SN. The UE suspends the SCG.

Step S16: The SN suspends the SCG of the UE.

It should be noted that the sequence of step S13 and step S14 in FIG. 3 may be interchanged, that is, step S13 may be before or after step S14, but step S16 needs to be after step S15.

In a case that the first node is an MN and the second node is an SN, as shown in FIG. 4, the steps of the specific implementation of this embodiment of this application include:
Step S21: The SN initiates SCG suspend and sends an SCG suspend request (SCG Suspend Request) to the MN.

Another implementation of the SCG Suspend Requests message may be an S-NODE MODIFICATION REQUIRED message carrying first indication information, where the first indication information is used for indicating suspending of the secondary node.

Step S22: The MN determines to suspend the SCG; and the MN sends an SCG suspend acknowledgment message to the SN.

It should be noted that in a case that the MN refuses to suspend the SCG, the MN sends a refuse message (SCG Suspend REFUSE) to the SN, and the process ends.

Step S23: The SN suspends the SCG.

Step S24: The MN sends an RRC reconfiguration message (RRC (Connection) Reconfiguration) to the UE, where the RRC reconfiguration message carries SCG Suspend information.

Step S25: The UE receives the RRC reconfiguration message (RRC (Connection) Reconfiguration) and sends an RRC reconfiguration completion message (RRC (Connection)ReconfigurationComplete) to the MN. The UE suspends the SCG.

The sequential order of steps S22 and S24 in FIG. 4 is not limited. In other words, step S22 may be before or after S24, but S25 is a subsequent step of S24.

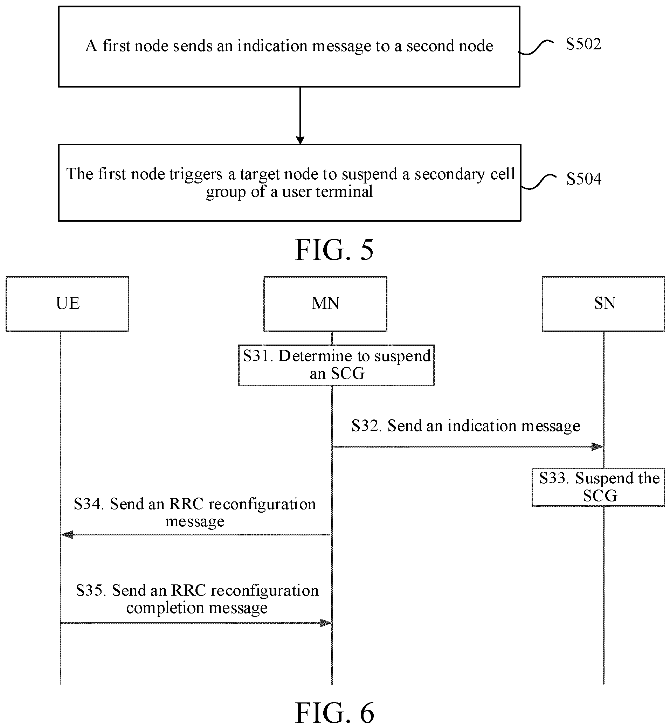

The embodiments of this application also provide a method for suspending a secondary cell group. FIG. 5 is a flowchart of a method for suspending a secondary cell group according to an embodiment of this application. As shown in FIG. 5, the steps of the method include:
Step S502: In a case that a first node determines to suspend a secondary cell group, the first node sends an indication message to a second node, where the indication message is used for instructing to notify the second node of a decision of suspending the secondary cell group of the user terminal.
Step S504: The first node triggers a target node to suspend the secondary cell group of the user terminal, where the target node is a node configured to control the secondary cell group; and the target node is the first node or the second node.

As can be learned from step S502 and step S504, the first node may decide by itself whether to suspend the SCG, upon deciding to suspend the SCG, the first node only needs to notify the second node of the decision, and finally, the node configured to control the SCG is triggered to suspend the SCG of the user terminal. The target node may be the first node or the second node.

It should be noted that, in this embodiment of this application, in a case that the first node is a master node, the second node is a secondary node; or in a case that the first node is a secondary node, the second node is a master node.

Therefore, in a case that the first node is an MN and the second node is an SN, step S502 and step S504 may be: in a case that the MN decides to suspend the SCG, the MN sends an indication message to the SN; and since the target node is a node for controlling the SCG, the MN triggers the SN to suspend the secondary cell group of the user terminal.

In a case that the first node is an SN and the second node is an MN, step S502 and step S504 may be: in a case that the SN decides to suspend the SCG, the SN sends an indication message to the MN; the SN suspends the secondary cell group of the user terminal; that is, the SN decides by itself to suspend the SCG and performs by itself an operation of suspending the SCG.

Optionally, in a case that the first node determines to suspend the secondary cell group, the method of this embodiment of this application may also include:
Step S506: The first node sends a reconfiguration message to the user terminal, where the reconfiguration message carries information of suspending the secondary cell group; and the first node and the second node are control nodes of the user terminal.
Step S508: The first node receives a reconfiguration completion message fed back by the user terminal in response to the configuration message.

In a case that the first node is an MN and the second node is an SN, the sequential order of step S506 and step S504 is not limited, that is, step S506 may be before step S504, or step S506 may be after step S504. It is also true for a case in which the first node is an SN and the second node is an MN, and the sequential order of step S506 and step S504 is not limited.

The following describes this application by examples in combination with a specific implementation of this embodiment of this application.

In a case that the first node is an MN and the second node is an SN, as shown in FIG. 6, the steps of the specific implementation of this embodiment of this application include:
Step S31: The MN determines to suspend an SCG.
Step S32: The MN sends an SCG suspend indication message (SCG Suspend Indication) to the SN. The SCG suspend indication message indicates that the MN is to suspend the SCG of the UE.
Step S33: The SN suspends the SCG.
Step S34: The MN sends an RRC reconfiguration message (RRC (Connection) Reconfiguration) to the UE. The RRC reconfiguration message carries SCG Suspend information.
Step S35: The UE receives the RRC reconfiguration message (RRC (Connection) Reconfiguration) and sends an RRC reconfiguration completion message (RRC (Connection)ReconfigurationComplete) to the MN. The UE suspends the SCG.

The order in which steps S32 and S34 are performed in FIG. 6 is not limited. In other words, step S32 may be before or after S34; however, step S33 is a subsequent step of S32, and step S35 is a subsequent step of S34.

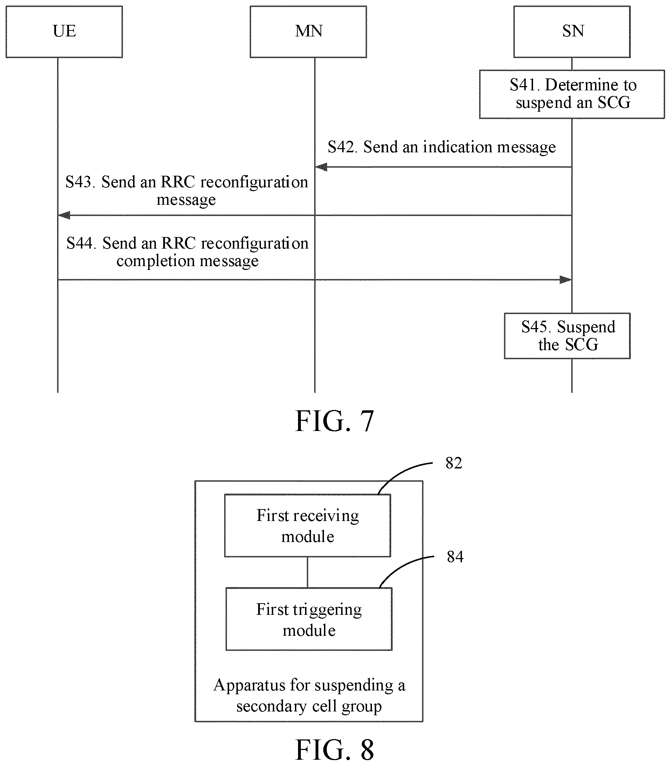

In a case that the first node is an SN and the second node is an MN, as shown in FIG. 7, the steps of the specific implementation of this embodiment of this application include:
Step S41: The SN determines to suspend an SCG.
Step S42: The SN sends an SCG suspend indication message (SCG Suspend Indication) to the MN. The SCG suspend indication message indicates that the SN is to suspend the SCG of the UE.
Step S43: The SN sends an RRC reconfiguration message (RRC (Connection) Reconfiguration) to the UE, where the RRC reconfiguration message carries SCG Suspend information.
Step S44: The UE receives the RRC reconfiguration message (RRC (Connection) Reconfiguration) and sends an RRC reconfiguration completion message (RRC (Connection)ReconfigurationComplete) to the SN. The UE suspends the SCG.
Step S45: The SN suspends the SCG after receiving the RRC reconfiguration completion message.

The sequential order of steps S42 and S43 in FIG. 7 may be interchanged, step S42 may be before or after S43.

It should be noted that, in the method for suspending a secondary cell group provided in this embodiment of this application, an execution entity may be an apparatus for suspending a secondary cell group, or a control module which is in an apparatus for suspending a secondary cell group and is configured to perform the method for suspending a secondary cell group. In this embodiment of this application, the apparatus for suspending a secondary cell group provided in this embodiment of this application is described by an example in which the apparatus for suspending a secondary cell group performs the method for suspending a secondary cell group.

FIG. 8 is a schematic structural diagram 1 of an apparatus for suspending a secondary cell group according to an embodiment of this application. As shown in FIG. 8, the apparatus includes:
a first receiving module 82, configured to receive a request message sent by a second node, where the request message is used for requesting to suspend the secondary cell group of a user terminal; and
a first triggering module 84, configured to trigger a target node to suspend the secondary cell group of the user terminal in a case that an acknowledgment message for indicating determining of suspending the secondary cell group is sent to the second node, where the target node is a node configured to control the secondary cell group; and the target node is the first node or the second node.

Optionally, the apparatus in this embodiment of this application may further include: a second triggering module, configured to send a reconfiguration message to the user terminal upon determining of suspending the secondary cell group, where the reconfiguration message carries information of suspending the secondary cell group; and a second receiving module, configured to receive a reconfiguration completion message fed back by the user terminal in response to the configuration message.

Optionally, in a case that the first node is a master node, the second node is a secondary node, or in a case that the first node is a secondary node, the second node is a master node.

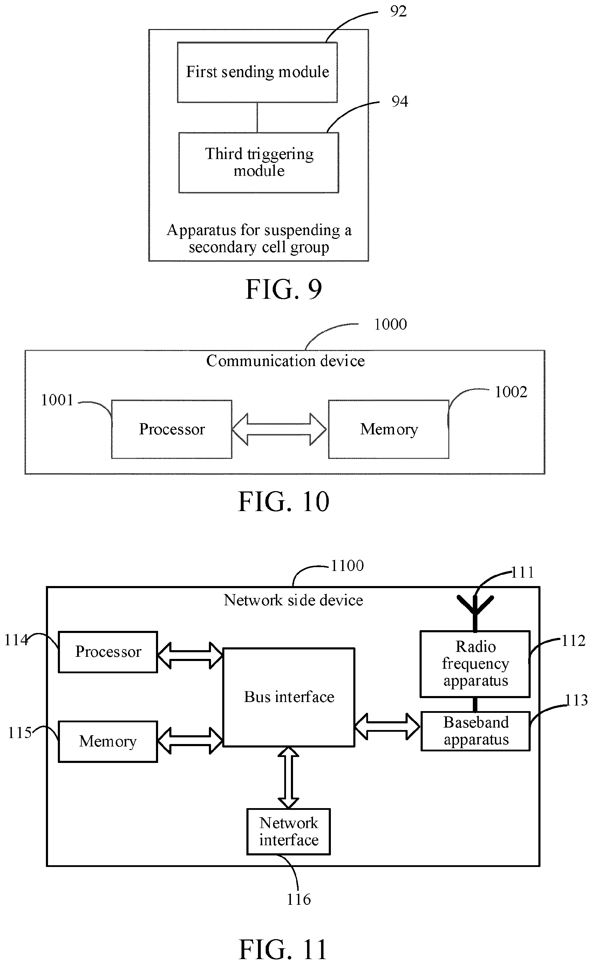

FIG. 9 is a schematic structural diagram 2 of an apparatus for suspending a secondary cell group according to an embodiment of this application. As shown in FIG. 9, the apparatus includes:
a first sending module 92, configured to send an indication message to a second node upon determining of suspending the secondary cell group, where the indication message is used for notifying the second node of a decision of suspending the secondary cell group of a user terminal; and
a third triggering module 94, configured to trigger a target node to suspend the secondary cell group of the user terminal, where the target node is a node configured to control the secondary cell group; and the target node is the first node or the second node.

Optionally, the apparatus in this embodiment of this application may further include: a second sending module, configured to send a reconfiguration message to the user terminal upon determining of suspending the secondary cell group, where the reconfiguration message carries information of suspending the secondary cell group; the first node and the second node are nodes configured to control the user terminal; and a third receiving module, configured to receive a reconfiguration completion message fed back by the user terminal in response to the configuration message.

Optionally, in a case that the first node is a master node, the second node is a secondary node, or in a case that the first node is a secondary node, the second node is a master node.

The apparatus for suspending a secondary cell group provided in this embodiment of this application can implement the processes implemented in the method embodiments of FIG. 2 and FIG. 5, and the same technical effect can be achieved, which are not repeated herein.

Optionally, as shown in FIG. 10, an embodiment of this application further provides a communication device 1000, including a processor 1001, a memory 1002, a program or instructions stored on the memory 1002 and capable of being run on the processor 1001. For example, in a case that the communication device 1000 is a network side device, the program or the instructions, when executed by the processor 1001, implement the processes of the foregoing embodiments of the method for suspending a secondary cell group, and in addition, the same technical effect can be achieved, which are not repeated herein in order to avoid duplication.

Specifically, an embodiment of this application further provides a network side device. As shown in FIG. 11, the network device 1100 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and sends the received information to the baseband apparatus 113 for processing. In the downlink direction, the baseband apparatus 113 processes the information to be sent and sends the information to the radio frequency apparatus 112, and the radio frequency apparatus 112 processes the received information and sends the processed information through the antenna 11.

The frequency band processing apparatus may be located in the baseband apparatus 113, the method performed by the network side device in the foregoing embodiments may be implemented in the baseband apparatus 113, and the baseband apparatus 113 includes a processor 114 and a memory 115.

For example, the baseband apparatus 113 may include at least one baseband board, and the baseband board is provided with a plurality of chips. As shown in FIG. 11, one of the chips is, for example, a processor 114, and is connected to the memory 115, to invoke a program in the memory 115 to perform an operation of a network device in the foregoing method embodiment.

The baseband apparatus 113 may also include a network interface 116 for information exchange with the radio frequency apparatus 112, and the interface is, for example, a common public radio interface (common public radio interface, CPRI for short).

Specifically, the network side device in this embodiment of the present invention further includes: instructions or a program stored on the memory 115 and capable of being run on the processor 114, where the processor 114 invokes the instructions or the program in the memory 115 to perform the method performed by the modules in FIG. 8 or FIG. 9, and the same technical effect is achieved, which are not repeated herein in order to avoid duplication.

The embodiments of this application further provide a readable storage medium storing therein a program or an instruction. The program or instruction is executable by a processor to perform the processes of the embodiments of the method for suspending a secondary cell group, and the same technical effects can be achieved, which will not be described in detail herein again to avoid repetition.

The processor is a processor in the terminal described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc or the like.

An embodiment of this application further provides a chip. The chip includes a processor and a communication interface. The communication interface is coupled to the processor. The processor is configured to run a program or instructions to implement the processes of the foregoing embodiments of the method for suspending a secondary cell group, and in addition, the same technical effect can be achieved, which are not repeated herein in order to avoid duplication.

It should be understood that the chip mentioned in this embodiment of this application may also be referred to as a system-grade chip, a system chip, a chip system, or a system-on-a-chip.

It should be noted that the terms "include", "comprise", or any other variation thereof in this specification intends to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, the features described with reference to some examples can be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

It should be understood that the foregoing division of the modules of the device is only a division of logical functions, which can be fully or partially integrated into a physical entity or physically separated in actual implementation. These modules may all be implemented in a form of software in a manner of invoking by a processing element; or may also be implemented in a form of hardware; some modules may also be implemented in a form of invoking software by a processing element, and some modules are implemented in a form of hardware. For example, the receiving module may be a separately established processing element, or may be integrated into a chip of the foregoing apparatus, and may also be stored on a memory of the foregoing apparatus in a form of program code, and the functions of the receiving module may be invoked and executed by a specific processing element of the foregoing apparatus. The implementation of other modules is similar. In addition, these modules may be integrated in whole or in part, or may be implemented independently. The processing element may be an integrated circuit and has a signal processing capability. In an implementation process, steps in the foregoing methods or the foregoing modules can be implemented by using a hardware integrated logical circuit in a processor element, or by using instructions in a form of software.

For example, the modules, units, subunits, or submodules may be one or more integrated circuits configured to implement the foregoing method, for example, one or more specific integrated circuits (Application Specific Integrated Circuits, ASICs), one or more microprocessors (digital signal processor, DSP), or one or more field programmable gate arrays (Field Programmable Gate Arrays, FPGA), or the like. In another example, in a case that one of the foregoing modules is implemented in a form of scheduling code by a processing element, the processing element may be a universal processor, for example, a central processing unit (Central Processing Unit, CPU) or another processor capable of invoking program code. Still in another example, these modules can be integrated and implemented in a form of a system-on-a-chip (system-on-a-chip, SOC).

Although the embodiments of this application have been described above with reference to the accompanying drawings, this application is not limited to the specific implementations described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A method for suspending a secondary cell group, comprising:
receiving, by a first node, a request message sent by a second node, wherein the request message is used for requesting to suspend a secondary cell group of a user terminal; and
in a case that the first node sends to the second node an acknowledgment message for indicating determining of suspending the secondary cell group, triggering, by the first node, a target node to suspend the secondary cell group of the user terminal, wherein the target node is a node configured to control the secondary cell group; and the target node is the first node or the second node.

2. The method according to claim 1, wherein in the case that the first node determines to suspend the secondary cell group, the method further comprises:
sending, by the first node, a reconfiguration message to the user terminal, wherein the reconfiguration message carries information of suspending the secondary cell group; and
receiving, by the first node, a reconfiguration completion message fed back by the user terminal in response to the configuration message.

3. The method according to claim 2, wherein in a case that the first node is a master node, the second node is a secondary node; or in a case that the first node is a secondary node, the second node is a master node.

4. The method according to claim 1, wherein the request message is a secondary node modification request message carrying first indication information, a secondary node modification demand message carrying first indication information, or an SCG suspend request message, wherein the first indication information is used for indicating suspending of the secondary node.

5. A method for suspending a secondary cell group, comprising:
in a case that a first node determines to suspend the secondary cell group, sending, by the first node, an indication message to a second node, wherein the indication message is used for notifying the second node of a decision of suspending the secondary cell group of a user terminal; and
triggering, by the first node, a target node to suspend the secondary cell group of the user terminal, wherein the target node is a node configured to control the secondary cell group; and the target node is the first node or the second node.

6. The method according to claim 5, wherein in the case that the first node determines to suspend the secondary cell group, the method further comprises:
sending, by the first node, a reconfiguration message to the user terminal, wherein the reconfiguration message carries information of suspending the secondary cell group; and the first node and the second node are control nodes of the user terminal; and
receiving, by the first node, a reconfiguration completion message fed back by the user terminal in response to the configuration message.

7. The method according to claim 6, wherein in a case that the first node is a master node, the second node is a secondary node; or in a case that the first node is a secondary node, the second node is a master node.

8. An apparatus for suspending a secondary cell group, comprising:
a first receiving module, configured to receive a request message sent by a second node, wherein the request message is used for requesting to suspend the secondary cell group of a user terminal; and
a first triggering module, configured to trigger a target node to suspend the secondary cell group of the user terminal in a case that an acknowledgment message for indicating determining of suspending the secondary cell group is sent to the second node, wherein the target node is a node configured to control the secondary cell group; and the target node is the first node or the second node.

9. The apparatus according to claim 8, further comprising:
a second triggering module, configured to send a reconfiguration message to the user terminal upon determining of suspending the secondary cell group, wherein the reconfiguration message carries information of suspending the secondary cell group; and
a second receiving module, configured to receive a reconfiguration completion message fed back by the user terminal in response to the configuration message.

10. The apparatus according to claim 8, wherein in a case that the first node is a master node, the second node is a secondary node; or in a case that the first node is a secondary node, the second node is a master node.

11. An apparatus for suspending a secondary cell group, comprising:
a first sending module, configured to send an indication message to a second node upon determining of suspending the secondary cell group, wherein the indication message is used for notifying the second node of a decision of suspending the secondary cell group of a user terminal; and
a third triggering module, configured to trigger a target node to suspend the secondary cell group of the user terminal, wherein the target node is a node configured to control the secondary cell group; and the target node is the first node or the second node.

12. The apparatus according to claim 11, further comprising:
a second sending module, configured to send a reconfiguration message to the user terminal upon determining of suspending the secondary cell group, wherein the reconfiguration message carries information of suspending the secondary cell group; and the first node and the second node are control nodes of the user terminal; and
a third receiving module, configured to receive a reconfiguration completion message fed back by the user terminal in response to the configuration message.

13. The apparatus according to claim 12, wherein in a case that the first node is a master node, the second node is a secondary node; or in a case that the first node is a secondary node, the second node is a master node.

14. A network side device, comprising a processor, a memory, and a program or instructions stored on the memory and executable by the processor, wherein the processor is configured to execute the program or the instructions to implement the steps of the method for suspending a secondary cell group according to any one of claims 1 to 4 or the steps of the method for suspending a secondary cell group according to any one of claims 5 to 7.

15. A readable storage medium, wherein the readable storage medium stores a program or instructions, and the processor is configured to execute the program or the instructions to implement the steps of the method for suspending a secondary cell group according to any one of claims 1 to 4 or the steps of the method for suspending a secondary cell group according to any one of claims 5 to 7.

16. A chip, comprising a processor and a communication interface, wherein the communication interface is coupled to the processor, and the processor is configured to execute the program or the instructions to implement the steps of the method for suspending a secondary cell group according to any one of claims 1 to 4 or the steps of the method for suspending a secondary cell group according to any one of claims 5 to 7.

17. A computer program product, stored on a readable storage medium, wherein the computer program product is executed by at least one processor to implement the steps of the method for suspending a secondary cell group according to any one of claims 1 to 4, or the steps of the method for suspending a secondary cell group according to any one of claims 5 to 7.

18. An apparatus for suspending a secondary cell group, wherein the apparatus is configured to perform the steps of the method for suspending a secondary cell group according to any one of claims 1 to 4, or the steps of the method for suspending a secondary cell group according to any one of claims 5 to 7.
